# EUROPÄISCHE PATENTSCHRIFT

(11) **EP 0 765 130 B1**
(45) Veröffentlichungstag und Bekanntmachung des Hinweises auf die Patenterteilung: **04.03.1998**
(21) Anmeldenummer: 95920699.6
(22) Anmeldetag: 09.06.1995
(51) Int. Cl.: A47B 87/00, E04B 1/61

(54) **BESCHLAG ZUM VERBINDEN VON BAUTEILEN**
STRIP FOR JOINING COMPONENTS
FERRURE PERMETTANT D'ASSEMBLER DES ELEMENTS DE CONSTRUCTION

(30) Priorität: 17.06.1994 DE 4421398
(43) Veröffentlichungstag der Anmeldung: 02.04.1997
(73) Patentinhaber: FRIEDRICH KNAPP GESELLSCHAFT M.B.H., A-3300 Amstetten (AT)
(72) Erfinder: KNAPP, Friedrich, A-3300 Amstetten (AT)
(74) Vertreter: Weinzinger, Arnulf, Dipl.-Ing.
(86) Internationale Anmeldenummer: AT9500115
(87) Internationale Veröffentlichungsnummer: WO9535050

(56) Entgegenhaltungen:
- AU-D- 4 058 972
- DE-A- 1 779 745
- GB-A- 759 545
- US-A- 2 703 912

## Beschreibung

Die Erfindung betrifft allgemein einen Beschlag für eine lösbare Verbindung von Bauteilen, insbesondere einen Beschlag für einen Stumpfstoß.

Ein Beschlag für einen derartigen Verwendungszweck ist z.B. aus der DE-B-1 779 745 bekannt. Bei dieser Anordnung ist in einem der zu verbindenden Bauteile eine Ausnehmung vorgesehen, in der eine gekröpfte Federleiste befestigt ist. Der gekröpfte Endabschnitt der Federleiste weist einen Längsschlitz zur Aufnahme einer Halteschraube auf, die an dem zu verbindenden Gegenstück vorgesehen ist. Eine derartige Anordnung ist jedoch nur für eine geringe Belastung geeignet und bietet nur einen geringen Schutz gegen Verdrehung.

Aus der FR-A-23 46 590 ist eine Verbindungsvorrichtung bekannt, die aus zwei formschlüssig ineinandergreifenden Verbindungselementen besteht, von denen das eine mit einem Haken und das andere mit einer Hakenöffnung versehen ist. Obwohl dieser Verbindungsvorrichtung auch zur Aufnahme großer Kräfte geeignet sein dürfte, weist sie doch wesentliche Nachteile auf. Abgesehen davon, daß die Herstellungskosten dieser Verbindungsvorrichtung aufgrund ihrer komplizierten Form sehr hoch sind, können die Verbindungselemente bedingt durch ihre spezielle Form nur in einer einzigen Weise miteinander verbunden werden.

Aus der DE-U-89 03 252 ist schließlich eine Verbindungsvorrichtung für Regale bekannt, bei der bloß ein Einhängen von Balken mit Hilfe von hakenförmigen Einhängteilen in Öffnungen von Ständern vorgesehen ist. Auch diese Verbindungsvorrichtung ist nicht multivalent an vorgegebene räumliche Verhältnisse anpaßbar. Aus der AU-D-4058972 wird ein U- bzw. J-förmiger Beschlag bekannt, der innerhalb von Ausnehmungen der zu Verbindenden Wandplatten angebracht ist.

Es ist daher Aufgabe der Erfindung, einen Beschlag zum Verbinden von Bauteilen zu schaffen, dessen einzelne Bestandteile (Elemente) eine sehr einfache Form aufweisen, so daß sie kostengünstig herstellbar sind. Weiterhin sollen die einzelnen Elemente so kombinierbar sein, daß entsprechend den vorgegebenen räumlichen Verhältnissen an der Verbindungsstelle ein Beschlag entsprechender Größe und großer Verbindungsstabilität geschaffen werden kann.

Demgemäß schafft die Erfindung einen Beschlag zum Verbinden von Bauteilen mit mindestens zwei stab- oder plattenförmigen, im wesentlichen starren Beschlagelementen, die jeweils als eine Beschlaghälfte mit einem der Bauteile zu verbinden sind, und die im wesentlichen einen rechteckigen Querschnitt und eine gleichbleibende Materialstärke aufweisen, wobei ein erstes Ende eines der Beschlagelemente als gekröpfte Verbindungszunge ausgebildet ist, die zu dem als Befestigungsbasis dienenden Rest des Beschlagelementes um die Materialstärke parallel versetzt ist.

Die Erfindung sieht demgemäß einen Beschlag vor, der in vorteilhafter Weise konstruktiv sehr einfach und gleich gestaltete, im wesentlichen starre Beschlagelemente aufweisen kann, aus denen je nach Anforderung bezüglich der Haltekraft und der räumlichen Einbauverhältnisse je eine Beschlaghälfte eines Beschlages aufgebaut werden kann. Wesentlich ist also, daß mit konstruktiv sehr einfachen und gleichen bzw. gleichartigen Beschlagelementen Beschläge unterschiedlicher Ausführungsformen geschaffen werden können, wobei eine kostengünstige Herstellbarkeit und Magazinierbarkeit sichergestellt werden können.

Zur Herstellung einer Verbindung mit Hilfe eines erfindungsgemäßen Beschlages kann beispielsweise derart vorgegangen werden, daß eine Seite bzw. Fläche eines zu verbindenen ersten Bauteils mit einer, der Höhe eines Beschlagelementes entsprechend tiefen Ausnehmung versehen wird. Ein erstes Beschlagelement wird mit seiner Befestigungsbasis auf dem Grund dieser Ausnehmung so befestigt, daß seine gekröpfte Verbindungszunge vom Grund der Ausnehmung beabstandet ist und bündig mit der Oberfläche des Bauteils abschließt. Auf der Oberfläche eines zweiten Bauteils wird ein zweites solches Beschlagelement befestigt. Sind die Bauteile zusammengefügt, greifen die gekröpften Verbindungszungen des ersten und des zweiten Beschlagelementes untereinander und bilden eine formschlüssige Verbindung.

Es ist aber auch möglich, die Verbindung einfach dadurch herzustellen, daß die Beschlagelemente auf der Oberfläche der zu verbindenden Bauteile befestigt sind.

Gemäß einer bevorzugten Ausführungsform des erfindungsgemäßen Beschlages ist vorgesehen, daß die Verbindungszunge wenigstens einen zum Ende hin offenen Steckschlitz für die Aufnahme des Schafts einer Halteschraube hat, und daß das der Verbindungszunge gegenüberliegende zweite Ende der Befestigungsbasis in Fluchtung mit jedem Steckschlitz eine der Schlitzweite entsprechende Bohrung für den Schaft einer weiteren Halteschraube besitzt. Bei dieser Ausführungsform wird somit ein zusätzliches Halteelement verwendet, das die Form einer Schraube hat und jeweils am Ende der Befestigungsbasis des Beschlagteiles, d.h. gegenüber den gekröpften Verbindungszungen, mit dem jeweiligen Bauteil fest verbunden wird. Die gekröpften Verbindungszungen weisen einen Steckschlitz auf, um im verbundenen Zustand die jeweilige Halteschraube anzunehmen, wobei die Verbindungszungen den Kopf der Halteschraube hintergreifen. Bedingt durch diese zusätzlichen Halteelemente hat die Verbindung eine besonders hohe Belastbarkeit.

Die Belastbarkeit kann auch dadurch gesteigert werden, daß das zweite Ende der Befestigungsbasis in Richtung auf die Verbindungszunge U-förmig umgebogen ist, wobei die zwischen der Befestigungsbasis und einem Schenkel ausgebildete Kehle eine der Materialstärke entsprechende lichte Weite hat. Bei dieser Ausführungsform greifen die Verbindungszungen jeweils wechselseitig in die U-förmigen Endabschnitte ein und werden dort formschlüssig gehalten. Zusätzlich ist es günstig, wenn der Schenkel in Fluchtung mit einer Bohrung in der Befestigungsbasis eine Bohrung zur Aufnahme einer Halteschraube hat.

Es ist auch von Vorteil, wenn die gekröpften Verbindungszungen eine Anfasung zur Verbesserung der Fügbarkeit aufweisen. In entsprechender Weise hat es sich als vorteilhaft erwiesen, wenn die Steckschlitze der Beschlagelemente zur Verbesserung der Fügbarkeit keilförmig nach außen erweitert sind.

Eine besonders einfache Verbindung kann hergestellt werden, wenn im verbundenen Zustand der Beschlagelemente die Verbindungszungen von zwei einander gegenüberliegenden Beschlagelementen einander wechselseitig hintergreifen. Eine erhöhte Stabilität wird erzielt, wenn im verbundenen Zustand der Beschlagelemente die Verbindungszunge eines Beschlagelementes in der Kehle des gegenüberliegenden Beschlagelementes aufgenommen ist. Zur Erhöhung der Festigkeit ist es ferner günstig, wenn im verbundenen Zustand der Beschlagelemente die Verbindungszungen einandere wechselseitig hintergreifen und dabei die Steckschlitze die Schäfte der Halteschrauben umfassen. Andererseits ist es von Vorteil, wenn im verbundenen Zustand der Beschlagelemente die Verbindungszunge des einen Beschlagelementes in der Kehle des gegenüberliegenden Beschlagelementes aufgenommen ist und dabei der Steckschlitz den Schaft der Haltschraube umfaßt.

Für große Belastungen hat sich auch eine Beschlagsausführung als vorteilhaft erwiesen, die dadurch gekennzeichnet ist, daß
- eine erste Beschlaghälfte aus zwei, in einem vorbestimmten Abstand parallel zueinander angeordneten Beschlagelementen besteht, die an ihren einen, ungekröpften Endabschnitten mittels eines Quersteges miteinander verbunden sind, wobei die Endabschnitte des Quersteges auf diesen Endabschnitten der Beschlagelemente befestigt sind und der Quersteg in seiner Mitte eine Halteschraube aufweist, und daß
- eine zweite Beschlaghälfte aus einem Beschlagelement besteht, das eine Breite aufweist, die dem vorbestimmten Abstand entspricht, wobei auf dem ungekröpften Endabschnitt ein Quersteg befestigt ist, der an seinen beiden Endabschnitten eine Halteschraube aufweist.

Zur Festigkeitserhöhung kann auch vorgesehen werden, daß die Beschlagelemente gemäß der zur Verfügung stehenden Verbindungsfläche kaskadenartig angeordnet sind.

Es ist weiter von Vorteil, wenn zwischen den zu verbindenden Beschlagelementen ein Federelement, z.B. eine Blattfeder, angeordnet ist, das bzw. die an einem der Beschlagelemente befestigt ist und eine Vorspannung erzeugt, die ein leichtes Herausrutschen der Beschlagelemente aus ihrer Verbindungsposition verhindert.

Schließlich ist es auch günstig, wenn die Beschlagelemente und gegebenenfalls die weiteren Halteelemente aus Material höherer Festigkeit bestehen, vorzugsweise aus Metall.

Es ist ein hauptsächlicher Gesichtspunkt der Erfindung, daß die miteinander in Eingriff stehenden Beschlagelemente im wesentlichen starr, d.h. nicht federnd, ausgebildet sind, und daß die gekröpften Verbindungszungen der Beschlagelemente im wesentlichen spielfrei und formschlüssig in Eingriff sind. Die einzelnen Beschlagelemente weisen eine sehr einfache geometrische und im wesentlichen gleiche Form auf, so daß eine kostengünstige Massenfertigung möglich ist. Weiterhin ermöglicht diese einfache geometrische Form eine automatisierte Herstellung der Beschläge. Die Beschlagelemente können leicht magaziniert und mittels Montiervorrichtungen automatisch an den zu verbindenden Bauteilen befestigt werden.

Weitere Merkmale der Erfindung gehen aus der folgenden Beschreibung und den Zeichnungen hervor, in denen vorteilhafte Ausführungsbeispiele schematisch dargestellt sind.

Fig.1a und 1b zeigen ein gekröpftes Beschlagelement im Längsschnitt und in Draufsicht.

Fig.2a bis 2d zeigen schematisch, wie zwei Bauteile mit Hilfe jeweils eines Beschlagelementes gemäß Fig.1 verbunden werden, und zwar in einer Draufsicht (Fig.2a) und in einer Seitenansicht (Fig.2b), im verbundenen Zustand in einer Draufsicht (Fig.2c) und in Seitenansicht (Fig.2d).

Fig.3a bis 3d zeigen eine weitere Ausführungsform eines Beschlages mit mehreren Beschlagelementen sowie das funktionelle Zusammenwirken beim Zusammenfügen, und zwar in Draufsicht (Fig.3a, 3c) und in Seitenansicht (Fig.3b, 3d).

Fig.4a und 4b zeigen in einer weiteren Ausführungsform zwei zu verbindende Bauteile mit je einem Beschlagelement, das zwei Längsschlitze aufweist, und zwar vor bzw. nach dem Verbinden.

Fig.5 zeigte in einer weiteren Ausführungsform zwei Bauteile mit jeweils einem stegförmigen Beschlagelement, das an einem Endabschnitt U-förmig abgewinkelt ist, und zwar zeigen die Fig.5b und 5c den nicht verbundenen Zustand in Seitenansicht bzw. Draufsicht und 5a und 5d den verbundenen Zustand.

Fig.6a und 6b zeigen den Gegenstand von Fig.5 in einer weiteren Ausgestaltung mit einer Blattfeder.

Fig.7a bis 7d zeigen den Beschlag gemäß Fig.1 in seiner einfachsten Verbindungsform, wobei Fig.7a und 7c den Zustand vor dem Verbinden der Bauteile und Fig.7b und 7d deren Zustand nach dem Verbinden - jeweils in Seitenansicht bzw. Draufsicht - verdeutlichen.

Fig.8a bis 8d zeigen einen Beschlag gemäß Fig.3 in entsprechender Darstellung, wobei keines der zu verbindenden Bauteile eine Ausnehmung aufweist und Fig.8a und 8b den Zustand vor dem Verbinden der Bauteile und Fig.8c und 8d deren Zustand nach dem Verbinden verdeutlichen.

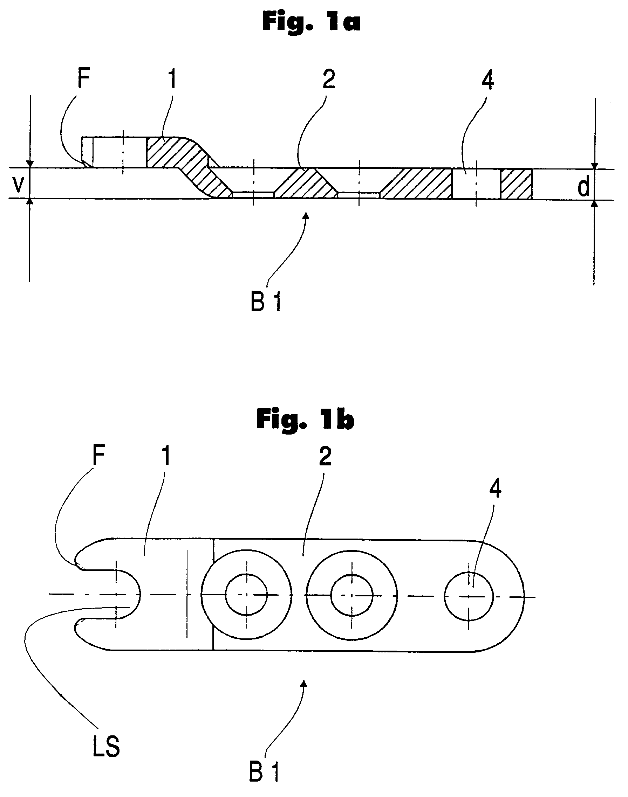

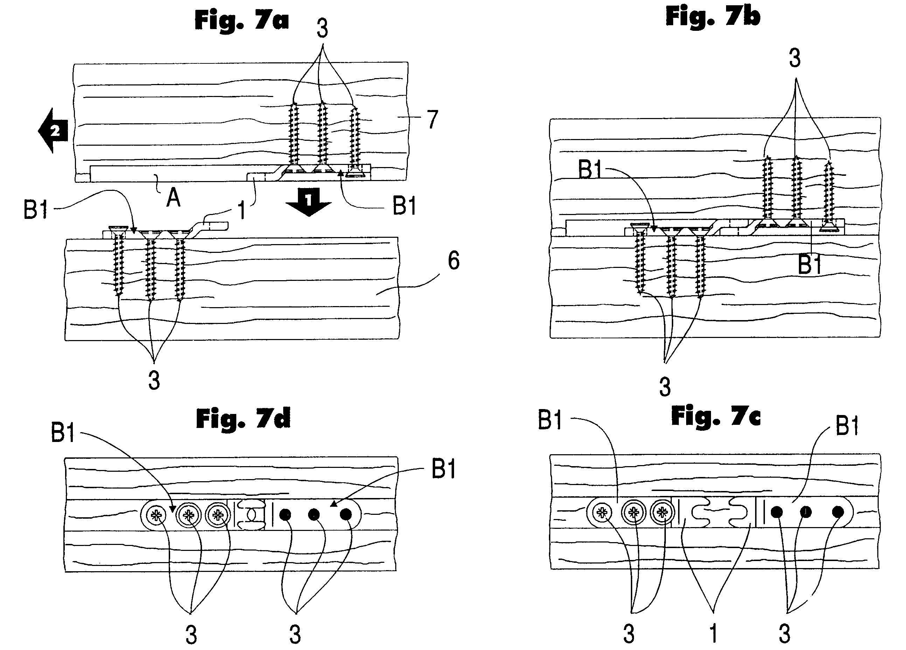

Der Beschlag zur Verbindung zweier Bauteile in einem stumpfen Stoß besteht in seiner einfachsten Ausführungsform gemäß Fig.7 grundsätzlich aus mindestens zwei gleichen Beschlagelementen B1 nach Fig.1. Das jeweilige Beschlagelement B1 selbst ist ein Stück Flachbandmaterial mit rechteckigem Querschnitt und einer Dicke d (Fig.1). Ein Ende ist parallel zu dem verbleibenden Rest abgekröpft. Diese Abkröpfung bildet eine Verbindungszunge 1. Die Verbindungszunge 1 ist um einen Betrag V, der gleich der Materialdicke d ist, zu dem verbleibenden Rest versetzt. Der verbleibende Rest wird als Befestigungsbasis 2 bezeichnet, die in diesem Ausführungsbeispiel zwei Befestigungslöcher für Senkschrauben 3 aufweist. Die Verbindungszunge 1 hat fluchtend und symmetrisch zur Längssymmetrieachse des Beschlagelementes B1 einen Einsteckschlitz LS, der trichterförmig erweitert ist. Desweiteren ist an der Verbindungszunge 1 unten eine keilförmige Anfasung F vorgesehen. Am Ende der Befestigungsbasis 2 befindet sich fluchtend zum Einsteckschlitz LS eine Bohrung 4. Der Einsteckschlitz LS und die Bohrung 4 werden hinsichtlich ihrer Funktion nachstehend noch näher erläutert.

Zur Herstellung der Bauteile-Verbindung gemäß Fig.7 wird ein erstes Beschlagelement B1 so auf der Oberfläche eines ersten Bauteils 6 festgeschraubt, daß seine Verbindungszunge 1 von der Bauteiloberfläche beabstandet ist. Dieser Abstand entspricht der Dicke d des Beschlagelementes B1. Das zweite Beschlagelement B1 wird auf dem Grund einer Ausnehmung A des zu verbindenden zweiten Bauteils 7 analog dem ersten Beschlagelement B1 befestigt. Die Tiefe der Ausnehmung A entspricht in dieser Ausführungsform dem Doppelten der Dicke d eines Beschlagelementes B1. Zum Verbinden der zwei Bauteile 6, 7 werden diese so zusammengefügt, daß sich die Verbindungszungen 1 wechselseitig untergreifen, wie insbesondere aus Fig.7b ersichtlich ist. Die Anfasungen F bewirken ein sicheres Untereinanderschieben der Verbindungszungen 1. Selbstverständlich muß die Länge der Ausnehmung A so bemessen sein, daß sie mindestens der Länge zweier Beschlagelemente B1 entspricht. Die Fig.7b verdeutlicht auch, daß die beiden übereinanderliegenden Verbindungszungen 1 die Ausnehmung A ausfüllen, so daß eine formschlüssige Verbindung entsteht und die Bauteile fugenfrei aneinanderliegen.

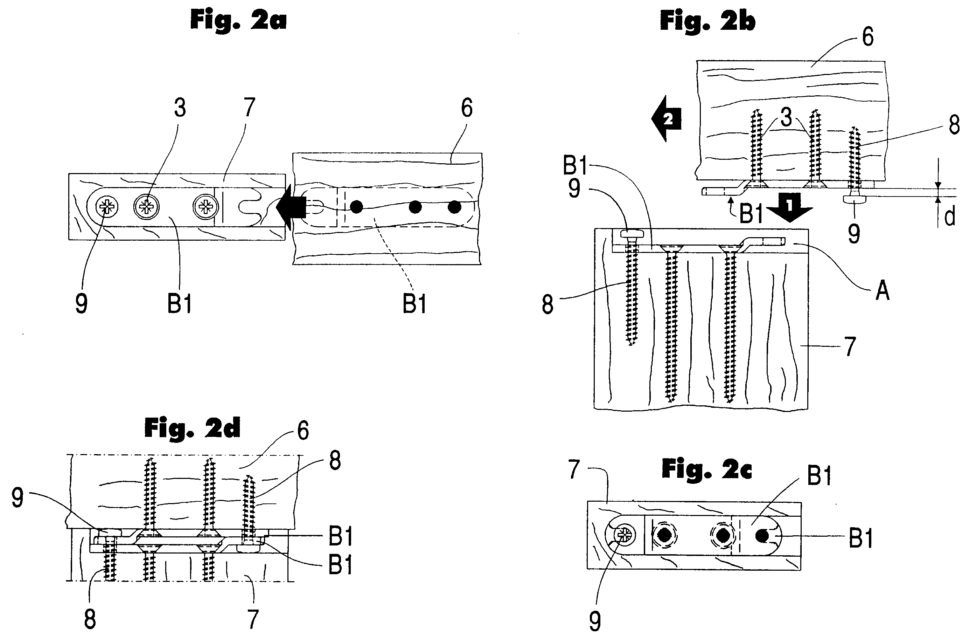

Wenn die Verbindung eine besonders hohe Haltekraft aufweisen soll, wird eine Ausführungsform nach Fig.2 bevorzugt. In dieser Ausführungsform wird ein zusätzliches Halteelement verwendet, das vorzugsweise als Schraube 8 mit einem Kopf 9 ausgebildet ist. Der Schaft dieser Schraube 8 verläuft durch die Bohrung 4 am Ende des Beschlagelementes B1, wobei gemäß Fig.2b die Unterkante des Schraubenkopfes 9 einen Abstand zur Oberfläche des Beschlagelementes B1 aufweist, der der Dicke d des Beschlagelementes B1 entspricht. Die Bauteile 6, 7 werden gemäß Fig.2a und Fig.2b in Richtung der Pfeile aufeinandergelegt und gegenseitig verschoben, bis gemäß Fig.2d und Fig.2c die Verbindungszungen 1 mit ihren Einsteckschlitzen LS die Schraubenköpfe 9 gegenseitig untergreifen. Die trichterförmigen Erweiterungen der Einsteckschlitze LS erleichtern das Erfassen der Schäfte der Schrauben 8. Bei dieser Ausführungsform der Verbindung ist die Tiefe der Ausnehmung A gleich dem Dreifachen der Dicke d eines Beschlagelementes B1.

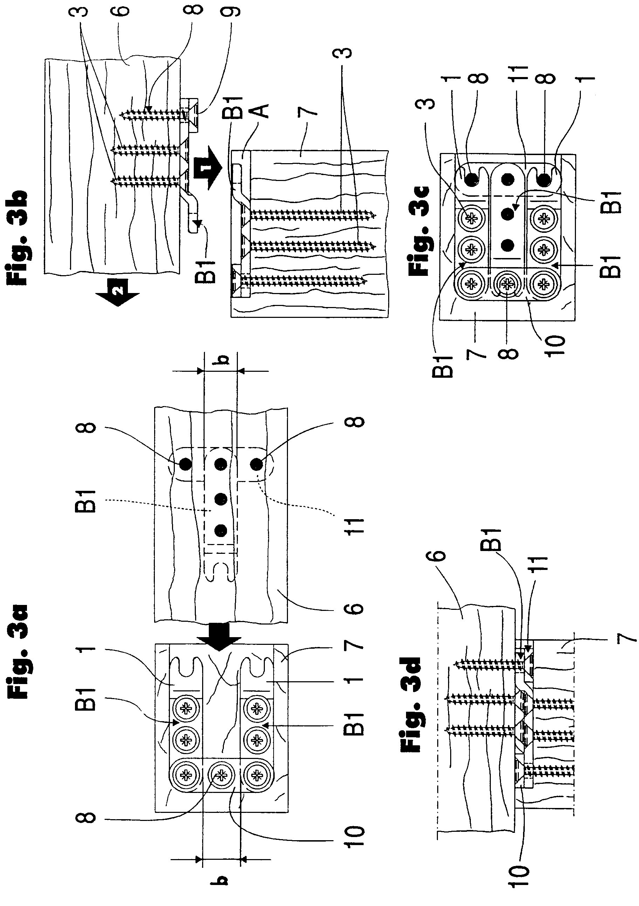

In Fig.3a bis 3d ist ein Beschlag gezeigt, der mehrere Beschlagelemente B1 in einer Kombination enthält. So weist nach Fig.3a der zu verbindende Bauteil 7 mit der Ausnehmung A zwei Beschlagelemente B1 auf, die parallel zueinander in einem vorbestimmten Abstand auf dem Boden der Ausnehmung A angeschraubt sind. Dieser Abstand entspricht der Breite b eines Beschlagelementes B1, das an dem anderen zu verbindenden Bauteil 6 angeschraubt ist. Über die zwei parallel angeordneten Beschlagelemente B1 ist ein Quersteg 10 geschraubt, der in seiner Mitte zur Erhöhung der Haltekraft noch mit einer Halteschraube 8 versehen ist. Der andere Bauteil 6 trägt nur das eine Beschlagelement B1 und dazu einen rechtwinkelig angeordneten Quersteg 11, der durch eine Befestigungsschraube in seiner Mitte befestigt ist und an seinen Enden je eine Halteschraube 8 aufweist. Die Halteschrauben 8 sind in diesem Anwendungsfall Senkkopfschrauben. In den Fig.3c und 3d ist dieser Beschlag im zusammengefügten Zustand gezeigt, wobei die Verbindungszunge 1 des Beschlagelementes B1 des Bauteils 6 unter die Halteschraube 8 des Quersteges 10 des Bauteils 7 und die Verbindungszungen 1 der Beschlagelemente B1 des Bauteils 7 die beiden Halteschrauben 8 am Quersteg 11 des Bauteils 6 untergreifen.

Es ist zu betonen, daß die Anordnung der Beschlagelemente B1 kaskadenartig beliebig kombinierbar und erweiterbar ist, so daß die für die Verbindung vorgesehenen Platz- bzw. Raumverhältnisse optimal ausgenutzt werden können.

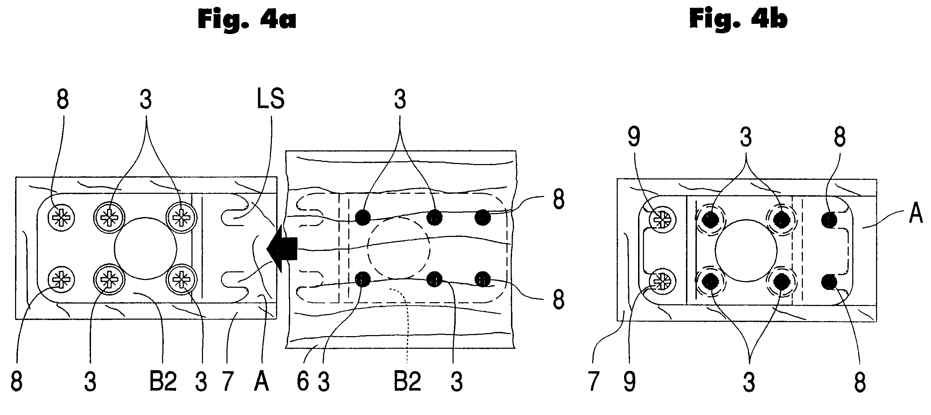

Die Fig.4a und 4b zeigen einen Beschlag mit zwei plattenförmigen Beschlagelementen B2 mit je zwei Einsteckschlitzen LS, je zwei Halteschrauben 8 und je vier Befestigungsschrauben 3. Durch die Verwendung von plattenförmigen Elementen mit mehreren Einsteckschlitzen werden weniger Einzelelemente benötigt, so daß bei der Herstellung eines Beschlages weniger Arbeitszeit erforderlich ist.

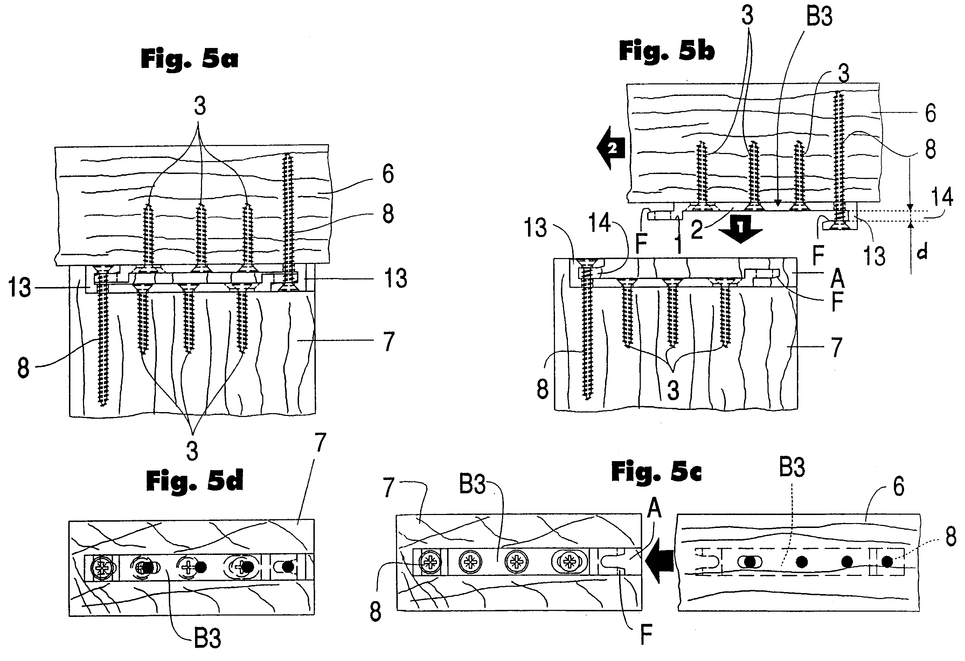

Die Fig.5a bis 5d zeigen einen Beschlag mit zwei Beschlagelementen B3, die hinsichtlich der Basis 2 und der abgekröpften Verbindungszunge 1 den Beschlagelementen B1 entsprechen, jedoch an dem der Verbindungszunge 1 gegenüberliegenden Endabschnitt eine U-förmige Abwinklung 13 haben, deren lichte Weite 14 zwischen dem Schenkel 15 und der Befestigungsbasis 2 der Dicke d eines Beschlagelementes entspricht. Die U-förmige Abwinklung 13 vergrößert zusätzlich die Stabilität der Verbindung, in dem sich zwei Beschlagteile B3 an ihren beiden Enden untergreifen. Hier übernimmt der Schenkel 15 die Funktion des Schraubenkopfes 9 bei den Beschlagelementen B1 und B2.

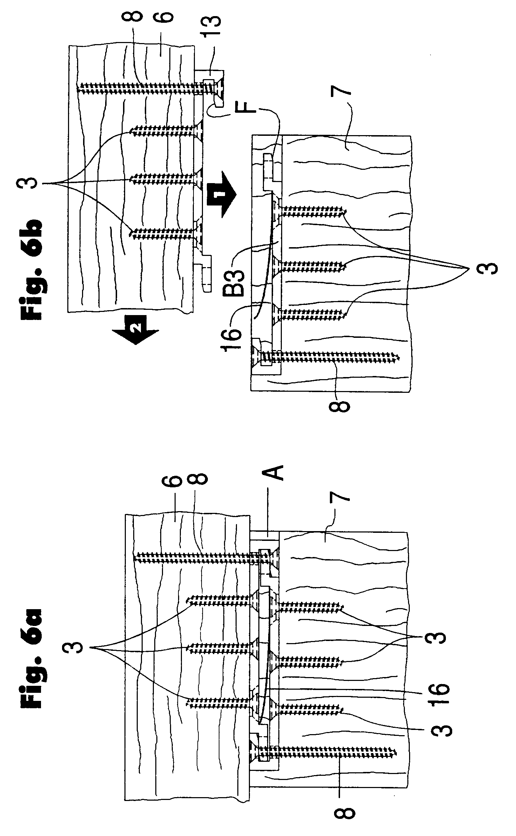

Die Fig.6a und 6b zeigen einen Beschlag mit zwei Beschlagelementen B3 gemäß Fig.5. Zusätzlich ist zwischen den zu verbindenden Beschlagelementen B3 ein Federelement 16 angeordnet, das an einem der Beschlagelemente B3 befestigt ist. Das Federelement 16 ist vorzugsweise eine Blattfeder. Durch diese Blattfeder wird eine zusätzliche Vorspannung erzeugt, die ein Herausrutschen der Beschlagelemente aus ihrer Verbindungsposition verhindert.

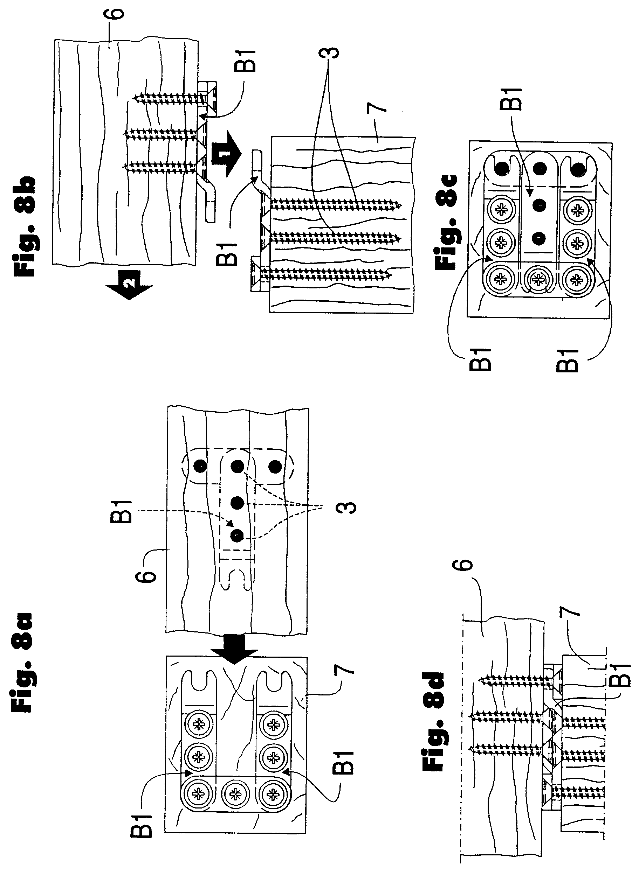

Die Fig.8a bis 8d zeigen eine weitere Ausführung, wobei der Beschlag nicht in einer Ausnehmung befestigt ist. Es gibt Anwendungsfälle, bei denen die Herstellung einer Ausnehmung nicht angezeigt ist. In solchen Fällen kann der Beschlag auch auf den jeweils äußeren Oberflächen der zu verbindenden Bauteile befestigt sein, wie dies speziell in den Fig.8b und 8d gezeigt ist.

Die vorstehende Beschreibung der Ausführungsformen dient der Erläuterung einiger beispielhafter Ausführungsformen des Erfindungsgegenstandes, wie er in den Patentanspüchen definiert ist.

## Patentansprüche

1. Beschlag zum Verbinden von Bauteilen mit mindestens zwei stab- oder plattenförmigen, im wesentlichen starren Beschlagelementen (B1), die jeweils als eine Beschlaghälfte mit einem der Bauteile (6, 7) zu verbinden sind, und die im wesentlichen einen rechteckigen Querschnitt und eine gleichbleibende Materialstärke (d) aufweisen, wobei ein Ende eines der Beschlagelemente (B1) als gekröpfte Verbindungszunge (1) ausgebildet ist, die zu dem als Befestigungsbasis (2) dienenden Rest des Beschlagelementes (B1) um die Materialstärke (d) parallel versetzt ist, und die wenigstens einen zum Ende hin offenen Steckschlitz (LS) für die Aufnahme des Schafts einer Halteschraube (8, 9) hat, wogegen das der Verbindungszunge (1) gegenüberliegende Ende der Befestigungsbasis (2) wenigstens eine Bohrung (4) für den Schaft einer weiteren Halteschraube (8, 9) besitzt.

2. Beschlag nach Anspruch 1, dadurch gekennzeichnet, daß die Bohrung (4) in Fluchtung mit dem jeweiligen Steckschlitz (LS) angeordnet ist und der Schlitzweite entspricht.

3. Beschlag nach Anspruch 1 oder 2, dadurch gekennzeichnet, daß das zweite Ende der Befestigungsbasis (2) in Richtung auf die Verbindungszunge (1) U-förmig umgebogen ist, wobei die zwischen der Befestigungsbasis (2) und einem Schenkel (15) ausgebildete Kehle eine der Materialstärke (d) entsprechende lichte Weite (14) hat.

4. Beschlag nach Anspruch 3, dadurch gekennzeichnet, daß der Schenkel (15) in Fluchtung mit einer Bohrung in der Befestigungsbasis (2) eine Bohrung zur Aufnahme einer Halteschraube (8, 9) hat.

5. Beschlag nach einem der Ansprüche 1 bis 4, dadurch gekennzeichnet, daß die gekröpften Verbindungszungen (1) eine Anfasung (F) zur Verbesserung der Fügbarkeit aufweisen.

6. Beschlag nach Anspruch 2 oder 3, dadurch gekennzeichnet, daß die Steckschlitze (LS) der Beschlagelemente zur Verbesserung der Fügbarkeit keilförmig nach außen erweitert sind.

7. Beschlag nach Anspruch 1, dadurch gekennzeichnet, daß im verbundenen Zustand der Beschlagelemente die Verbindungszungen (1) von zwei einander gegenüberliegenden Beschlagelementen einander wechselseitig hintergreifen (Fig.7).

8. Beschlag nach Anspruch 3, dadurch gekennzeichnet, daß im verbundenen Zustand der Beschlagelemente die Verbindungszunge (1) eines Beschlagelementes in der Kehle des gegenüberliegenden Beschlagelementes aufgenommen ist (Fig.5).

9. Beschlag nach Anspruch 2, dadurch gekennzeichnet, daß im verbundenen Zustand der Beschlagelemente die Verbindungszungen (1) einandere wechselseitig hintergreifen und dabei die Steckschlitze (LS) die Schäfte der Halteschrauben (8, 9) umfassen (Fig.2).

10. Beschlag nach Anspruch 4, dadurch gekennzeichnet, daß im verbundenen Zustand der Beschlagelemente die Verbindungszunge (1) des einen Beschlagelementes in der Kehle des gegenüberliegenden Beschlagelementes aufgenommen ist und dabei der Steckschlitz (LS) den Schaft der Haltschraube (8,9) umfaßt (Fig.5).

11. Beschlag nach Anspruch 1 oder 2, dadurch gekennzeichnet, daß
- eine erste Beschlaghäfte aus zwei, in einem vorbestimmten Abstand (b) parallel zueinander angeordneten Beschlagelementen (B1) besteht, die an ihren einen, ungekröpften Endabschnitten mittels eines Quersteges (10) miteinander verbunden sind, wobei die Endabschnitte des Quersteges (10) auf diesen Endabschnitten der Beschlagelemente (B1) befestigt sind und der Quersteg (10) in seiner Mitte eine Halteschraube (8, 9) aufweist, und daß
- eine zweite Beschlaghälfte aus einem Beschlagelement (B1) besteht, das eine Breite aufweist, die dem vorbestimmten Abstand (b) entspricht, wobei auf dem ungekröpften Endabschnitt ein Quersteg (11) befestigt ist, der an seinen beiden Endabschnitten eine Halteschraube (8, 9) aufweist (Fig.3).

12. Beschlag nach einem der Ansprüche 1 bis 4, dadurch gekennzeichnet, daß die Beschlagelemente gemäß der zur Verfügung stehenden Verbindungsfläche kaskadenartig angeordnet sind.

13. Beschlag nach Anspruch 3, dadurch gekennzeichnet, daß zwischen den zu verbindenden Beschlagelementen ein Federelement (16), z.B. eine Blattfeder, angeordnet ist, das bzw. die an einem der Beschlagelemente (B3) befestigt ist und eine Vorspannung erzeugt, die ein leichtes Herausrutschen der Beschlagelemente aus ihrer Verbindungsposition verhindert (Fig.6).

14. Beschlag nach einem der Ansprüche 1 bis 13, dadurch gekennzeichnet, daß die Beschlagelemente und gegebenenfalls die weiteren Halteelemente aus Material höherer Festigkeit bestehen, vorzugsweise aus Metall.

15. Verbindung mit einem Beschlag nach einem der Ansprüche 1 bis 14, dadurch gekennzeichnet, daß die Beschlagelemente auf der Oberfläche der zu verbindenden Bauteile befestigt sind (Fig.8).

16. Verbindung mit einem Beschlag nach einem der Ansprüche 1 bis 14, dadurch gekennzeichnet, daß eine erste Beschlaghälfte auf der Oberfläche eines zu verbindenden Bauteils (7) befestigt ist, und die dazu adäquate zweite Beschlaghälfte auf dem Grund einer Ausnehmung (A) des zu verbindenen zweiten Bauteils (6) befestigt ist, wobei die Tiefe der Ausnehmung (A) so bestimmt wird, daß die Verbindungszungen (1), gegebenenfalls über ihre Anfasung (F), mit dem jeweiligen Gegenstück unter Vorspannung in Eingriff bringbar sind und eine im wesentlichen spielfreie, formschlüssige Verbindung bilden (Fig.2).

## Claims

1. A connecting means for connecting structural elements comprising at least two rod or plate-shaped, substantially rigid connecting elements (B1) each to be connected as one half of the connecting means with one of the structural elements (6, 7), and having a substantially rectangular cross-section and a uniform material thickness (d), an end of one of the connecting elements (B1) being designed as an offset connecting tab (1) which is offset in parallel by the material thickness (d) relative to the remaining part of the connecting element (B1) which serves as the fastening base (2), the connecting tab (1) having at least one insertion slot (LS) which is open towards the tab end to accommodate the shaft of a retention screw (8, 9), whereas that end of the fastening base (2) located opposite the connecting tab (1) has at least one bore (4) for the shaft of a further retention screw (8, 9).

2. A connecting means according to claim 1, characterised in that the bore (4) is aligned with the respective insertion slot (LS) and corresponds to the slot width.

3. A connecting means according to claims 1 or 2, characterised in that the second end of the fastening base (2) is bent in the shape of a U towards the connecting tab (1), wherein the channel formed between the fastening base (2) and a leg (15) has a clear width (14) corresponding to the material thickness (d).

4. A connecting means according to claim 3, characterised in that the leg (15) has a bore for receiving a retention screw (8, 9), said bore being aligned with a bore in the fastening base (2).

5. A connecting means according to any one of claims 1 to 4, characterised in that the offset connecting tabs (1) comprise a chamfer (F) for improving the joinability.

6. A connecting means according to claim 2 or 3, characterised in that the insertion slots (LS) of the connecting elements are outwardly flared in wedge shape to improve the joinability.

7. A connecting means according to claim 1, characterised in that the connecting tabs (1) of two oppositely arranged connecting elements mutually engage each other in the connected state of the connecting elements (Fig. 7).

8. A connecting means according to claim 3, characterised in that the connecting tab (1) of one connecting element is received in the channel of the oppositely arranged connecting element in the connected state of the connecting elements (Fig. 5).

9. A connecting means according to claim 2, characterised in that the connecting tabs (1) mutually engage one another in the connected state of the connecting elements, the insertion slots (LS) thereby surrounding the shafts of the retention screws (8, 9) (Fig. 2).

10. A connecting means according to claim 4, characterised in that the connecting tab (1) of the one connecting element is received in the channel of the oppositely arranged connecting element in the connected state of the connecting elements, and that the insertion slot (LS) thus surrounds the shaft of the retention screw (8, 9) (Fig. 5).

11. A connecting means according to claim 1 or 2, characterised in that
- a first connecting means half is comprised of two connecting elements (B1) arranged at a predetermined distance (b) in parallel to each other, which are interconnected at the non-offset end sections by means of a transverse web (10), the end sections of the transverse web (10) being fastened to these end sections of the connecting elements (B1), and the transverse web (10) having a retention screw (8, 9) at its center, and in that
- a second connecting means half is comprised of a connecting element (B1) having a width corresponding to the pre-determined distance (b), wherein a transverse web (11) is fastened to the non-offset end section, which transverse web has a retention screw (8, 9) at each of its two end sections (Fig. 3).

12. A connecting means according to any one of claims 1 to 4, characterised in that the connecting elements are arranged in cascade form according to the connection area available.

13. A connecting means according to claim 3, characterised in that a spring element (16), e.g. a leaf spring, is arranged between the connecting elements to be connected, which is fastened to one of the connecting elements (B3) and creates a pre-stress preventing the connecting elements from slipping out easily of their connected position (Fig. 6).

14. A connecting means according to any one of claims 1 to 13, characterised in that the connecting elements and optionally the further retention elements consist of a material of higher strength, preferably of metal.

15. A connection including a connecting means according to any one of claims 1 to 14, characterised in that the connecting elements are fastened to the surface of the structural elements to be connected (Fig. 8).

16. A connection including a connecting means according to any one of claims 1 to 14, characterised in that a first connecting means half is fastened to the surface of a structural element (7) to be connected, and in that the adequate second connecting means half is fastened to the base of a recess (A) of the second structural element (6) to be connected, the depth of the recess (A) being such that the connecting tabs (1), optionally via their chamfer (F), can be engaged with the respective counterpiece under pre-stress, and form a positive connection, substantially without clearance (Fig. 2).

## Revendications

1. Ferrure pour assembler des éléments de construction avec au moins deux éléments de ferrure (B1) sensiblement rigides en forme de barre ou de plaque, chacun d'eux étant destiné à être assemblé comme une moitié de ferrure à l'un des éléments de construction (6, 7) et présentant sensiblement une section transversale rectangulaire ainsi qu'une épaisseur de matière (d) constante, une extrémité de l'un des éléments de ferrure (B1) étant conformée en languette d'assemblage (1) coudée qui est décalée parallèlement, par rapport au reste de l'élément de ferrure (B1) servant de base de fixation (2), de l'épaisseur de matière (d) et qui présente au moins une fente d'introduction (LS) ouverte vers l'extrémité pour recevoir la tige d'une vis de retenue (8, 9), tandis que l'extrémité de la base de fixation (2) opposée à la languette d'assemblage (1) possède au moins un alésage (4) pour recevoir la tige d'une vis de retenue (8, 9) supplémentaire.

2. Ferrure selon la revendication 1, caractérisée en ce que l'alésage (4) est disposé dans l'alignement avec la fente d'introduction (LS) respective et correspond à la largeur de la fente.

3. Ferrure selon la revendication 1 ou 2, caractérisée en ce que la seconde extrémité de la base de fixation (2) est recourbée en U en direction de la languette d'assemblage (1), la gorge formée entre la base de fixation (2) et un montant (15) présentant une largeur intérieure (14) correspondant à l'épaisseur de matière (d).

4. Ferrure selon la revendication 3, caractérisée en ce que le montant (15) présente, en alignement avec un alésage prévu dans la base de fixation (2), un alésage destiné à la réception d'une vis de retenue (8, 9).

5. Ferrure selon l'une des revendications 1 à 4, caractérisée en ce que les languettes d'assemblage coudées (1) comprennent un biseau (F) pour faciliter l'assemblage.

6. Ferrure selon la revendication 2 ou 3, caractérisée en ce que les fentes d'introduction (LS) des éléments de ferrure sont élargies en coin vers l'extérieur pour faciliter l'assemblage.

7. Ferrure selon la revendication 1, caractérisée en ce qu'en état assemblé des éléments de ferrure, les languettes d'assemblage (1) de deux éléments de ferrure disposés en vis-à-vis sont réciproquement en prise l'une derrière l'autre (Fig. 7).

8. Ferrure selon la revendication 3, caractérisée en ce qu'en état assemblé des éléments de ferrure, la languette d'assemblage (1) d'un élément de ferrure est logée dans la gorge de l'élément de ferrure disposé en vis-à-vis (Fig. 5).

9. Ferrure selon la revendication 2, caractérisée en ce qu'en état assemblé des éléments de ferrure, les languettes d'assemblage (1) sont réciproquement en prise l'une derrière l'autre, les fentes d'introduction (LS) entourant alors les tiges des vis de retenue (8, 9) (Fig. 2).

10. Ferrure selon la revendication 4, caractérisée en ce qu'en état assemblé des éléments de ferrure, la languette d'assemblage (1) de l'un des éléments de ferrure est logée dans la gorge de l'élément de ferrure disposé en vis-à-vis, la fente d'introduction (LS) entourant alors la tige de la vis de retenue (8, 9) (Fig. 5).

11. Ferrure selon la revendication 1 ou 2, caractérisée en ce que
- une première moitié de ferrure se compose de deux éléments de ferrure (B1) disposés parallèlement l'un par rapport à l'autre à une distance (b) prédéterminée, qui sont assemblés à l'une de leurs portions d'extrémité non coudées à l'aide d'une traverse (10), les portions d'extrémité de la traverse (10) étant fixées sur lesdites portions d'extrémité des éléments de ferrure (B1) et la traverse (10) comportant une vis de retenue (8, 9) disposée dans son centre et en ce que
- une seconde moitié de ferrure est constituée par un élément de ferrure (B1) présentant une largeur correspondant à la distance prédéterminée (b), une traverse (11) qui comporte une vis de retenue (8, 9) à ses deux portions d'extrémité (Fig. 3) étant fixée sur la portion d'extrémité non coudée.

12. Ferrure selon l'une des revendications 1 à 4, caractérisée en ce que Tes éléments de ferrure sont disposés en cascade selon la surface d'assemblage disponible.

13. Ferrure selon la revendication 3, caractérisée en ce qu'un élément de ressort (16), par exemple un ressort à lame, qui est fixé sur l'un des éléments de ferrure (B3) et qui produit une précontrainte, est disposé entre les éléments de ferrure destinés à être assemblés pour empêcher un échappement aisé des éléments de ferrure par glissement depuis leur position d'assemblage (Fig. 6).

14. Ferrure selon l'une des revendications 1 à 13, caractérisée en ce que les éléments de ferrure et, le cas échéant, les éléments de maintien supplémentaires consistent en un matériau ayant une résistance plus élevée, de préférence en métal.

15. Assemblage comportant une ferrure selon l'une des revendications 1 à 14, caractérisé en ce que les éléments de ferrure sont fixés à la surface des éléments de construction à assembler (Fig. 8).

16. Assemblage comportant une ferrure selon l'une des revendications 1 à 14, caractérisé en ce qu'une première moitié de ferrure est fixée à la surface d'un élément de construction (7) à assembler et en ce que la seconde moitié de ferrure correspondant de façon adéquate à la première est fixée au fond d'un évidement (A) du second élément de construction à assembler (6), la profondeur de l'évidement (A) étant déterminée de manière à ce que les languettes d'assemblage (1) soient aptes à entrer en prise sous précontrainte avec la pièce respective correspondante, le cas échéant par l'intermédiaire de son biseau (F), en constituant un assemblage à engagement positif sensiblement sans jeu (Fig. 2).
